# EUROPEAN PATENT APPLICATION

(11) **EP 2 610 671 A1**
(43) Date of publication of application: **03.07.2013**
(21) Application number: 11864005.1
(22) Date of filing: 13.06.2011
(51) Int. Cl.: G03B 19/00, H04N 5/225, G01V 8/00

(54) **360-DEGREE AUTOMATIC TRACKING HUNTING CAMERA AND OPERATION METHOD THEREOF**

(30) Priority: 18.04.2011 CN 201110096875
(71) Applicant: Guangzhou Jinghua Optical&electronics Co., Ltd, Guangzhou, Guangdong 510000 (CN)
(72) Inventor: XIA, Denghai, Guangdong 510000 (CN); GE, Zhongzhu, Guangdong 510000 (CN); SONG, Xin, Guangdong 510000 (CN); ZHOU, Li, Guangdong 510000 (CN)
(74) Representative: Serjeants LLP
(86) International application number: PCT/CN2011/075644
(87) International publication number: WO 2012/142783

(57) **Abstract**

The invention discloses a camera comprises a central processing unit (the processor), at least three infrared sensors connected to respective input port of the processor, and a camera head connected to the processor and is controllable by the processor, a rotation mechanism for mounting the camera head and for pivoting clockwise or counterclockwise under control of the processor, and a power supply for providing power to the above mentioned processor, camera head, infrared sensors and the rotation mechanism. All the infrared sensors are arranged circumferentially on the device and a vision scope of one infrared sensor partially overlaps with a vision scope of an adjacent infrared sensor such that the total vision scope covers 360 degrees. Each infrared sensor defines a shooting orientation, and the partially overlapping area of the vision scopes of adjacent infrared sensors also defines a shooting orientation such that the total shooting orientation is doubled. The invention is advantageous in that a target object within the 360 degree range can be captured by the device, and the arrangement of valid shooting orientations may greatly simplify the control process and therefore extend the battery life.

## Description

### TECHNICAL FIELD

This invention relates to photographic devices and operating methods thereof, and particularly relates to 360-degree automatic tracking hunting cameras for outdoor use and the operating methods thereof.

### BACKGROUND ARTS

One of the current hunting cameras for 360 degree scanning and shooting is basically constructed by a camera head mounting on a mounting head and is pivotable on the mounting head in an intermittent manner. For a camera of this type, the camera head is pivoting and shooting intermittently throughout its running time. Such an arrangement may bring several problems, first of all, service life of the camera head and/or the mounting head can be very short, secondly, a large portion of the pictures taken by the camera head may not be usable or valuable since shooting objects, such as animals, may not be present for most of the time, and thirdly, driving the mounting head could consume large amount of power, and therefore a battery of large capacity is required which would increase the overall cost of the device.

Another type of hunting camera is disclosed by Chinese Utility model patent CN 201789556 U published on April 6, 2011. Such a hunting camera is capable of sensing heat radiation from animal and then initiates the shooting function only when heat radiation around the camera is sensed. Although initiation of the picture shooting is possible, drawbacks still exists, such as limited shooting range and low precision positioning of shooting objects, such as animals.

### SUMMARY OF INVENTION

One objective of the invention is to provide a 360 degree hunting camera for automatic tracking of animals with a simplified structure.

A 360 degree automatic tracking hunting camera, comprising a central processing unit, n infrared sensors connected to respective input ports of the processing unit, wherein n is a natural number greater than or equal to 3, and a camera head, a rotation mechanism and a power supply unit all of which are connected to the processing unit and are controllable by the processing unit, wherein the rotation mechanism for mounting the camera head is capable of pivoting clockwise or counterclockwise under control of the processing unit, wherein all the infrared sensors are arranged circumferentially on the device and a vision scope of one infrared sensor partially overlaps with a vision scope of an adjacent infrared sensor such that the total vision scope covers 360 degrees; wherein each infrared sensor defines a shooting orientation, and the partially overlapping area of the vision scopes of adjacent infrared sensors also defines a shooting orientation such that the total shooting orientation is doubled.

Preferably, the device further comprises a digital compass connected to the processing unit which is statically attached to the camera relative to the camera head and is driven by the rotation mechanical to pivot synchronously with the camera head to output an orientation signal to the processing unit by means of which the geographical orientation of the camera is determined.

Preferably, the camera head is mounted along the Y axis of an X-Y coordinate system of the digital compass.

Preferably, an illumination unit is connected to the processing unit, said illumination unit comprising at least one brightness detection sensor for detecting ambient brightness and at least one infrared LED which is driven by a LED driver, and the at least one infrared LED is arranged on the device such that it is pivotable along with the camera head.

Preferably, switches, such as switching diode or a switching transistor, can be provided in the power supplying circuit of the power supply unit for the rotation mechanism, the camera head and the infrared illumination unit.

Preferably, the rotation mechanism comprises a step motor for pivoting the camera head via a transmission mechanism, and a motor diver via which operation of the step motor is controlled by the processing unit.

Another purpose of the invention is aimed at providing an operating method for the above mentioned device.

A method according to one aspect of the invention comprises the following steps: powering on the device such that the device enters an standby mode in which state the camera head stops at a initial orientation (also referred to as a standby orientation), and the processing unit and the infrared sensors are powered by the power supply unit; wherein the processing unit takes the following steps: scanning the input ports of the processing unit which are connected to the infrared sensors until an input signal from at least one sensor is detected; determining a valid shooting orientation according to the input signals detected substantially simultaneously at the input ports of the processing unit and controlling the power supply unit to provide power to the rotation mechanism and the camera head; calculating the orientation difference between the initial orientation and the determined valid shooting orientation, and based on the calculated difference, controlling the rotation mechanism to pivot the camera head from the initial orientation sequentially to the nearest valid shooting orientation and to the furthest valid shooting orientation for shooting at each valid shooting orientation; controlling the rotation mechanism to pivot the camera head back to the initial orientation after finishing shooting at all valid shooting orientations; and restoring the device to the standby mode.

A valid shooting orientation is preferably determined by the following steps: if input signals coming from two adjacent infrared sensors are detected substantially simultaneously, the shooting orientation that corresponding to the partially overlapping area of the vision scopes of the two adjacent infrared sensors is determined as a valid shooting orientation, whereas the shooting orientations corresponding to the respective vision scope of the two adjacent infrared sensors are determined as invalid shooting orientations; and if input signals are detected from the input ports of the processing unit connected to two non-adjacent sensors substantially simultaneously, the respective shooting orientations that correspond to the respective vision scope of two non-adj acent sensors are determined as a valid shooting orientation.

Preferably, since the digital compass is arranged statically relative to the camera head and is synchronously pivotable with the camera head, the processing unit is configured to record an orientation mark onto a video clip or a picture acquired, which is derived from geographical signal provided by the digital compass.

Preferably, at least the infrared LED of the illumination unit is pivotable by the rotation mechanism along with the camera head.

After power is supplied to the rotation mechanism, the camera head and the infrared illumination unit at the control of the processing unit, ambient brightness is collected by the brightness detection sensor of the illumination unit and is then compared with a predetermined threshold value by the processing unit. In case it is determined that the ambient brightness is lower than the threshold value, the infrared LED will be activated when the camera head is pivoted to a valid shooting orientation.

The invention is advantageous in that: a target object within the 360 degree range can be captured by the device, and arrangement of valid shooting orientations may greatly simplify the control process and therefore extending the battery life. In improvements of this invention, when a digital compass is employed, geographical orientation can be acquired during shooting and therefore precise geographical orientation of the camera can be known even if the device is placed randomly outdoors.

### DESCRIPTION OF DRAWINGS

FIG 1 is a block diagram showing the overall system structure of a 360 degree automatic tracking hunting camera according to one embodiment of the invention;
FIG 2 shows an exemplary arrangement of the infrared sensors in FIG 1;
FIG 3 is a flowing chart showing the working routine of the hunting camera of FIG 1.

### DESCRIPTION OF PREFERRED EMBODIMENTS

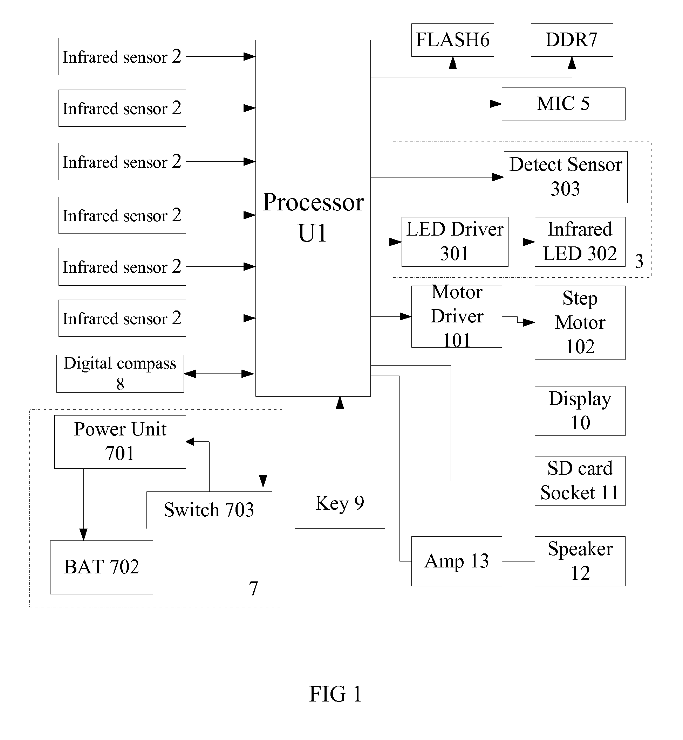

Reference is made to FIG 1, the 360 degree automatic tracking hunting camera according to one embodiment of the invention comprises a central processing unit (also referred to as a processor) U1, a plurality of infrared sensors 2, and a camera head, a rotation mechanism and a power supply unit 7 which are all connected to the processor U1 and are controlled by the processor. Signals generated by the infrared sensors 2 are transferred to the processor U1 for further analysis and processing. More particularly, the infrared sensors are connected to and communicate with respective input ports of the processor U1. The camera head can be driven by the rotation mechanism to pivot around one of the pivot directions, i.e. clockwise or counterclockwise. In a standby mode of the device, the camera head is configured to stop at an initial orientation and, after shooting, the camera head is also driven back to this initial orientation under the control of processor U1. All infrared sensors are arranged circumferentially on the device such that the total vision scopes of all the infrared sensors cover at least a 360 degree range. Respective shooting orientations are defined by the vision scope of each infrared sensor, and respective shooting orientations are also defined by the partial overlapping areas of the vision scopes of two adjacent infrared sensors. Assuming the number of the infrared sensor is n, the number of shooting orientation shall thus be 2n. It is particularly advantageous if n is a natural number no less than 3. In one embodiment of the invention, a shooting orientation refers to a fixed position within the corresponding vision scope or corresponding partial overlapping area of vision scopes.

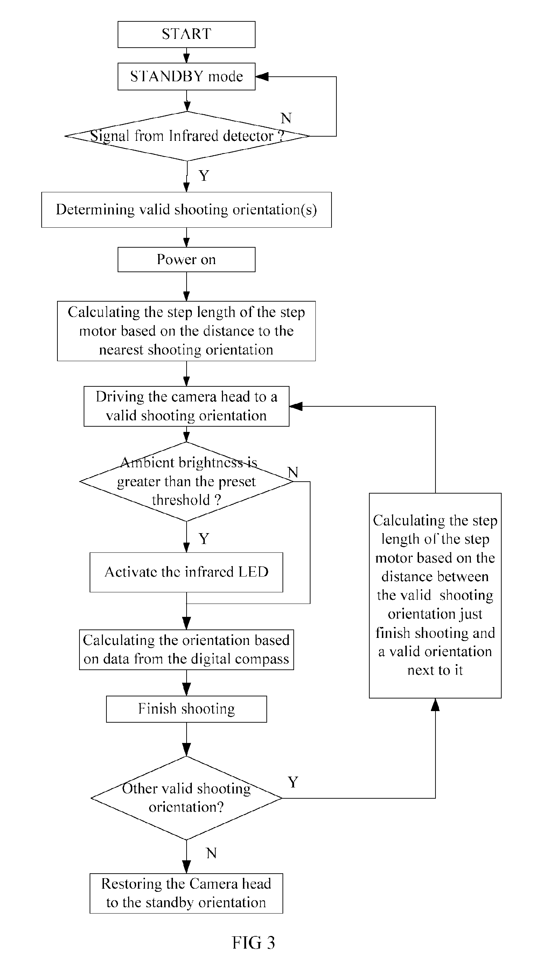

With reference to FIG 3, the 360 degree automatic tracking shooting camera is operating under the following operation flow:

The device is powered on so that the device enters a standby mode in which mode the camera head is maintained at a initial orientation, and the processor U1 and the infrared sensors 2 are powered on by the power supply unit 7. The processor U1 takes the following steps:
Step 1, scanning the input ports of the processor U1 which are connected to the infrared sensors 2, if a output signal is detected then turn to Step 2, scanning continues if no signal is detected;
Step 2, a valid shooting orientation is determined by the processor U1 according to the input signals detected substantially simultaneously from the input ports and power is provided to the rotation mechanism and the camera head by the power supply unit 7 at the control of the processor U1;
Step 3, the processor U1 calculates the orientation difference between the initial orientation and each valid shooting orientation along the pivot direction, and based on each of the calculated differences controls the rotation mechanism to pivot the camera head from the nearest valid shooting orientation to the furthest valid shooting orientation sequentially for taking pictures or videos at respective valid shooting orientations;
Step 4, the camera head is pivoted back to the initial fixed orientation by the rotation mechanism at the control of the processor U1 after shootings at the all valid shooting orientations are finished.

When the above-mentioned steps are completed, the device is restored to the standby mode.

As can be seen from FIG 3, in Step 3, the camera head is initially pivoted to a shooting orientation that is nearest to the standby orientation, after shooting is made, e.g. a picture is taken, the camera head is pivoted around one direction to a shooting orientation that is the second nearest to the standby orientation and sequentially to any further shooting orientations for taking shots.

Typically, only one valid shooting orientation will be presented substantially simultaneously, therefore, it is only necessary to drive the camera to the valid shooting orientation at the control of processor U1 to finish a picture shooting and then drive the camera back to the initial orientation, i.e. the standby orientation. In addition, substantially simultaneously can typically refer to the time needed for the processor U1 to scan all its input ports connected to the infrared sensors 2, i.e. a scanning cycle of the controller. However, as the time for a cycle of the controller is very short, a combination of several cycles can also be considered as "substantially simultaneously" to facilitate implementation.

The determination of valid shooting orientation in Step 2 can be achieved by:
(1) If a movement of a target object is sensed only by one infrared sensor 2 and therefore outputs an signal to the corresponding input port of the processor U1, the orientation corresponding to this infrared sensor is determined as a valid shooting orientation; and
(2) If output signals from two adjacent infrared sensors are detected substantially simultaneously at the input ports of the processor U1, the orientation corresponding to the partially overlapping area of the vision scopes of the two adjacent infrared sensors is determined as a valid shooting orientation whereas the orientations corresponding to the vision scopes of the respective infrared sensors will not be determined as valid shooting orientations.

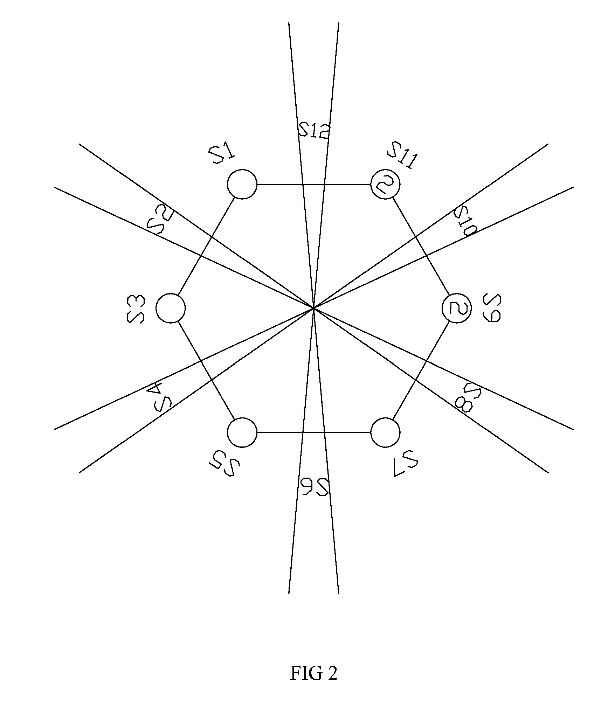

Referring now to FIG 2, in one embodiment of this invention, six infrared sensors are provided, and are preferably equally spaced around a circumference of the device. Within the six infrared sensors, a first infrared sensor corresponds to a first shooting orientation S1, a second infrared sensor corresponds to a third shooting orientation S3, a third infrared sensor corresponds to a fifth shooting orientation S5, a fourth infrared sensor corresponds to a seventh shooting orientation S7, a fifth infrared sensor corresponds to a ninth shooting orientation S9, a sixth infrared sensor corresponds to a eleventh shooting orientation S11, the partially overlapping area of the respective vision scope of the adjacently arranged first infrared sensor and the second infrared sensor corresponds to a second shooting orientation S2, the partially overlapping area of the respective vision scope of the adjacently arranged second infrared sensor and the third infrared sensor corresponds to a fourth shooting orientation S4, the partially overlapping area of the respective vision scope of the adjacently arranged third infrared sensor and the fourth infrared sensor corresponds to a sixth shooting orientation S6, the partially overlapping area of the respective vision scope of the adjacently arranged fourth infrared sensor and the fifth infrared sensor corresponds to a eighth shooting orientation S8, the partially overlapping area of the respective vision scope of the adjacently arranged fifth infrared sensor and the sixth infrared sensor corresponds to a tenth shooting orientation S10, and the partially overlapping area of the respective vision scope of the adjacently arranged sixth infrared sensor and the first infrared sensor corresponds to a twelfth shooting orientation S12. From the above-mentioned arrangement, it can be seen that if output signals are sent both from the first infrared sensor and the second infrared sensor at substantially the same time, orientation S2 is then determined as a valid shooting orientation; if output signals are sent from the first infrared sensor, the second infrared sensor, and the third infrared sensor at substantially the same time, it is then determined that orientation S2 and S4 are valid shooting orientations; if output signals are sent from the first infrared sensor, the second infrared sensor, and the fourth infrared sensor substantially at the same time, it is determined that the valid shooting orientations are S2 and S7. In this embodiment, infrared sensor may have a horizontal view angle of 70 degrees.

In the case that output signals are sent from two adjacent infrared sensors substantially at the same time, i.e. substantially simultaneously, three orientations can be determined as valid shooting orientation, i.e. the respective orientations of the infrared sensors and the orientation corresponding to the partially overlapping area of the vision scope of the two infrared sensors. In actual tests, it is however found that only one orientation, i.e. the orientation corresponds to the partially overlapping area of the vision scope of the two infrared sensors would be sufficient for acquiring valid or say valuable pictures, and therefore, the other two additional orientations may not be necessary.

Hunting cameras in various embodiments of this invention can further comprise a digital compass 8, as shown in FIG 1, which provides direction signals to the processor U1 and is pivotable together with the camera head in a synchronous manner at the drive of the rotation mechanism. The digital compass is provided with an internally predefined X-Y coordination system and is capable of calibrating geographical direction with the X-Y coordination system such that geographical NORTH can be mirrored to a angular value of the coordination system based on magnetic force of the earth. Since the position of the camera head is fixed at a point within the X-Y coordination system, the actual geographical orientation of the camera head can be acquired by the processor U1 regardless of the initial positioning and angle of rotation of the camera head. In this embodiment, the camera head can be placed at the Y direction of the coordination system. The geographical orientation signal received by the processor U1 is processed at the processor and a result containing the geographical orientation of the camera head can be attached to the picture of video clip taken by the camera head.

In addition, in order to facilitate shooting during night-time, an infrared illumination unit 3 connected to the processor and communicating with the processor can be provided. The infrared illumination unit 3 can comprise a brightness detection sensor 303 and at least one infrared LED 302. After the infrared illumination unit 3 is powered by the power supply unit at the control of the processor U1, the detected ambient brightness value is sent to the processor for comparison with a predetermined threshold value, and if the detected value is below the threshold value, infrared illumination through the at least one infrared LED 302 is activated by power on the LED driver 301 through the processor U1 when the camera head is pivoted to a valid shooting orientation. At least the infrared LED 302 of the infrared illumination unit is pivotable with the camera head through the rotation mechanism.

In this embodiment, the rotation mechanism can be constructed by a step motor 102, a motor driver 101 for receiving control signal from the processor and driving the step motor accordingly, and a transmission mechanism coupled to the motor by means of which the camera head. The digital compass and the infrared LED 3 can be pivoted to a desired angle by the step motor. The transmission mechanism can be in the form of a set of meshed gears, e.g. comprising a driving gear coupled on the main shaft of the step motor, and a pulley gear coupled to the disk for mounting the camera head, the digital compass and the infrared LED. In this case, for driving the camera head to a valid orientation or back to the initial standby orientation, the step length of the step motor 102 is determined by the angle between the standby orientation and the nearest valid shooting orientation, or the angle between the two valid shooting orientations, and the transmission ratio of the gear pair. In addition, in an embodiment of the invention, about 1 second from outputting of the signal from the infrared sensor is set as a valid shooting time for the camera head, therefore, the transmission mechanism and the step motor shall be properly arranged such that the constructed rotation mechanism could drive the camera head from the standby orientation at least to the furthest shooting orientation from one direction, i.e. about 360 degrees.

The power supply unit 7 may comprise a power management unit 701 for managing the charge and discharge of the battery 702, a switch 703 and a battery 702. The processor U1 and the infrared sensors 2 are powered by the battery at all times. The power to the rotation mechanism, the camera head and the infrared illumination unit are all controlled by the processor U1 through the switch 703, e.g. a switching diode.

A display 10 and a SD card reader 11 connected to the processor U1 can also be incorporated into the hunting camera in this invention. Keys or buttons 9 for function setting can also be provided. The device can also be improved with a audio unit which may comprise a microphone for converting sound to electronic signal and a speaker driven by an amplifying circuit 13 for converting the electronic signal sent from the processor to sound.

Moreover, memory unit connected and communicate with the processor U1 can be provide. Such memory unit can be a FLASH memory 6 and/or DDR (double data rate) memory 7.

The device can be configured to shoot video or static pictures and can be configured to stop at a valid shooting orientation for a period time and to take several pictures at one orientation. The video and or picture taken can be stored to a memory, e.g. an SD card. In addition to the geographical information, time information can also be attached to the video or picture whereby both time and geographical information of a video and or a picture can be seen in the future for inspection.

The embodiments of the present invention are not limited to the particular components and process steps disclosed herein as such components and process steps may vary somewhat. Moreover, the terminology adopted herein is used for the purpose of describing exemplary embodiments only and the terminology is not intended to be limiting since the scope of the various embodiments of the present invention will be limited only by the appended claims and equivalents thereof. Indeed, the above descriptions are exemplary and yet other features and embodiments exist.

Therefore, while embodiments of the invention are described with reference to exemplary embodiments, those skilled in the art will understand that variations and modifications can be effected within the scope of the invention as defined in the appended claims. Accordingly, the scope of the various embodiments of the present invention should not be limited to the above discussed embodiments. Rather, the full scope of the invention and all equivalents should only be defined by the following claims and all equivalents.

## Claims

1. A 360 degree automatic tracking hunting camera, comprising
a central processing unit,
n infrared sensors connected to respective input ports of the processing unit, wherein n is a natural number greater than or equal to 3, and
a camera head, a rotation mechanism and a power supply unit all of which are connected to the processing unit and are controllable by the processing unit,
wherein the rotation mechanism for mounting the camera head is capable of pivoting clockwise or counterclockwise under control of the processing unit,
wherein all the infrared sensors are arranged circumferentially on the camera and a vision scope of one infrared sensor partially overlaps with a vision scope of an adjacent infrared sensor such that the total vision scope covers 360 degrees,
wherein each infrared sensor defines a shooting orientation, and the partially overlapping area of the vision scopes of adjacent infrared sensors also defines a shooting orientation such that the total shooting orientation is doubled.

2. The hunting camera according to claim 1, further comprising a digital compass connected to the processing unit which is statically attached to the camera relative to the camera head and is driven by the rotation mechanical to pivot synchronously with the camera head to output a orientation signal to the processing by means of which the geographical orientation of the camera head is determined.

3. The hunting camera according to claim 2, wherein the camera head is mounted along a Y axis of an X-Y coordinate system of the digital compass.

4. The hunting camera according to claim 1, wherein an infrared illumination unit is communicatively connected to the processing unit, the infrared illumination unit comprising at least one brightness detection sensor for detecting ambient brightness and at least one infrared LED which is driven by a LED driver, and wherein the at least one infrared LED is arranged such that it is pivotable along with the camera head.

5. The hunting camera according to claim 4, wherein switches are provided in a power supplying circuit of the power supply unit for the rotation mechanism, the camera head and the infrared illumination unit.

6. The hunting camera according to any of claims 1 to 5, wherein the rotation mechanism comprises a step motor for pivoting the camera head via a transmission mechanism, and a motor driver via which operation of the step motor is controlled by the processing unit.

7. An operating method of the camera according to claim 1, comprising the steps of:
powering on the camera to a standby mode in which the camera head is configured to stop at an initial orientation and the processing unit and the infrared sensors are powered by the power supply unit and in which the processing unit takes following steps:
scanning input ports of the processing unit which are connected to the respective infrared sensors until an input signal from at least one infrared sensor is detected;
determining a valid shooting orientation according to input signals detected substantially simultaneously at the input ports and controlling the power supply unit to provide power to the rotation mechanism and the camera head;
calculating the orientation differences between the initial orientation and each of the determined valid shooting orientations, and based on the calculated difference controlling the rotation mechanism to pivot the camera head from the initial orientation sequentially between the nearest valid shooting orientation and the furthest valid shooting orientation for shooting at each of the valid shooting orientations;
controlling the rotation mechanism to pivot the camera head back to the initial orientation after finishing shooting at all valid shooting orientations and restoring the camera to the standby mode.

8. The method of claim 7, wherein a valid shooting orientation is determined by the following steps:
if two input signals provided by two adjacent infrared sensors are detected substantially simultaneously, the shooting orientation corresponding to the partially overlapping area of the vision scopes of the two adjacent infrared sensors is determined as a valid shooting orientation, whereas the shooting orientations corresponding to the respective vision scope of the two adjacent infrared sensors are not determined as a valid shooting orientation;
if two input signals provided by two non-adjacent infrared sensors are detected substantially simultaneously, the respective shooting orientations that correspond to the respective vision scope of the two non-adjacent infrared sensors are determined as a valid shooting orientation.

9. The method of claim 7 or 8, wherein the digital compass is arranged statically relative to the camera head and is synchronously pivotable with the camera head, the processing unit is configured to record an orientation mark onto a video clip or a picture acquired, which is derived from a geographical signal provided by the digital compass.

10. The method of claim 7 or 8, wherein an infrared illumination unit is communicatively connected to the processing unit, the infrared illumination unit comprising at least one brightness detection sensor for detecting ambient brightness and at least one infrared LED which is driven by a LED driver, and the at least one infrared LED is arranged such that it is pivotable along with the camera head, and in the process of determining a valid shooting orientation the method further comprises the steps of:
collecting ambient brightness by the brightness detection sensor of the illumination unit after power is supplied to the rotation mechanism, the camera head and the infrared illumination unit at the control of the processing unit; and
comparing the detected brightness value with a predetermined threshold value by the processing unit and if it is determined that the ambient brightness is lower than the threshold value, the infrared LED is activated when the camera head is pivoted to a valid shooting orientation.
